(19) **Europäisches Patentamt / European Patent Office / Office européen des brevets**

(11) **EP 2 175 121 A1**

(12) **DEMANDE DE BREVET EUROPEEN**

(43) Date de publication:
**14.04.2010 Bulletin 2010/15**

(21) Numéro de dépôt: **09290720.3**

(22) Date de dépôt: **18.09.2009**

(51) Int Cl.:
*F02D 35/02* (2006.01)   *F02D 19/12* (2006.01)
*F02D 41/40* (2006.01)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **09.10.2008 FR 0805580**

(71) Demandeur: **IFP**
**92852 Rueil-Malmaison Cédex (FR)**

(72) Inventeurs:
• **Auclair, Dominique**
 **94350 Villiers-sur-Marne (FR)**
• **Duval, Laurent**
 **92000 Nanterre (FR)**
• **Pagot, Alexandre**
 **92500 Rueil-Malmaison (FR)**
• **Thirouard, Benoist**
 **92500 Rueil-Malmaison (FR)**
• **Zaccardi, Jean-Marc**
 **74600 Seynod (FR)**

(54) **Procédé de détection de combustion anormale pour moteurs à combustion interne**

(57) Procédé de détection de combustion anormale pour moteurs à combustion interne (10) à allumage commandé comprenant les caractéristiques suivantes:
Pour chaque cycle moteur, on détermine un paramètre caractérisant une distribution de N valeurs d'indicateurs de la combustion, le CA10 par exemple, acquises sur N cycles précédant le cycle en cours, en s'affranchissant des valeurs extrêmes. A partir de ce paramètre, on définit un seuil pour l'indicateur de la combustion. On détecte alors le début d'une combustion anormale en comparant l'indicateur de la combustion avec ce seuil, et on contrôle le déroulement de la combustion anormale détectée dans la chambre de combustion.

**Fig. 2**

## Description

La présente invention concerne le domaine du contrôle de la phase de combustion d'un moteur à combustion interne. Notamment la présente invention se rapporte à une méthode pour détecter une combustion anormale, du type pré allumage à bas régime et à forte charge, dans une chambre de combustion d'un tel moteur.

Elle concerne plus particulièrement mais non exclusivement une telle méthode appliquée à un moteur à allumage commandé « downsizé », fonctionnant sous très fortes charges.

Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression, puis une étape de combustion sous l'effet d'un allumage commandé, par une bougie. Ces étapes sont regroupées sous le vocable de « phase de combustion » dans la suite de la description.

Il a pu être constaté que ce mélange carburé peut subir différents types de combustion, et que ces types de combustion sont la source de différents niveaux de pression, ainsi que de contraintes mécaniques et/ou thermiques, dont certaines peuvent endommager gravement le moteur.

La première combustion, dite combustion conventionnelle ou combustion normale, est le résultat de la propagation de la combustion d'un mélange carburé comprimé lors d'une étape préalable de compression du moteur. Cette combustion se propage normalement selon un front de flamme à partir de l'étincelle générée à la bougie, et ne risque pas de détériorer le moteur.

Un autre type de combustion est une combustion avec cliquetis, qui résulte d'une auto-inflammation indésirable dans la chambre de combustion. Ainsi, après l'étape de compression du mélange carburé, la bougie est actionnée pour permettre l'allumage de ce mélange carburé. Sous l'effet de la pression générée par le piston, et de la chaleur dégagée par le début de la combustion du mélange carburé, il se produit une auto-inflammation brutale et localisée d'une partie du mélange carburé comprimé, avant que n'arrive le front de flamme issu de l'allumage du mélange carburé par la bougie. Ce mécanisme, dénommé cliquetis, conduit à une augmentation locale de la pression et de la température et peut engendrer, en cas de répétitions, des effets destructifs sur le moteur et principalement au niveau du piston.

Enfin, un autre type de combustion est une combustion anormale due à un pré-allumage du mélange carburé avant que la bougie n'initie l'allumage du mélange carburé présent dans la chambre de combustion.

Cette combustion anormale affecte les moteurs qui sont le résultat d'une opération de "miniaturisation", plus connu sous le terme anglais de "downsizing". Cette opération vise à diminuer la taille et/ou la cylindrée du moteur tout en conservant la même puissance et/ou le même couple que des moteurs conventionnels. Généralement, ce type de moteurs est principalement de type essence et est fortement suralimenté.

Il a pu être constaté que cette combustion anormale se réalise à fortes charges, et généralement lors des bas régimes de fonctionnement du moteur, lorsque le calage de la combustion du mélange carburé ne peut pas être l'optimum à cause du cliquetis. Compte tenu des fortes pressions et des températures élevées atteintes dans la chambre de combustion par la suralimentation, un démarrage de combustion anormale peut se produire, sporadiquement ou de façon continue, bien avant le moment où se réalise l'allumage du mélange carburé par la bougie. Cette combustion se caractérise par une première phase de propagation de flamme qui est calée trop tôt par rapport à celle d'une combustion conventionnelle. Cette phase de propagation peut être interrompue par une auto-inflammation qui va concerner une grande partie du mélange carburé présent dans la chambre de combustion, beaucoup plus grande que dans le cas du cliquetis.

Dans le cas où cette combustion anormale se produit de façon répétitive, de cycle-moteur à cycle-moteur, et se réalise à partir d'un point chaud du cylindre par exemple, celle-ci est dénommée "pré-allumage". Si cette combustion se produit de manière violente, aléatoire et sporadique, elle est appelée "claquement" ou "rumble" (« pre-ignition »).

Cette dernière combustion anormale entraîne des niveaux de pressions très élevés (120 à 250 bars), ainsi qu'une augmentation des transferts thermiques qui peuvent entraîner une destruction partielle ou totale de l'équipage mobile du moteur, comme le piston ou la bielle.

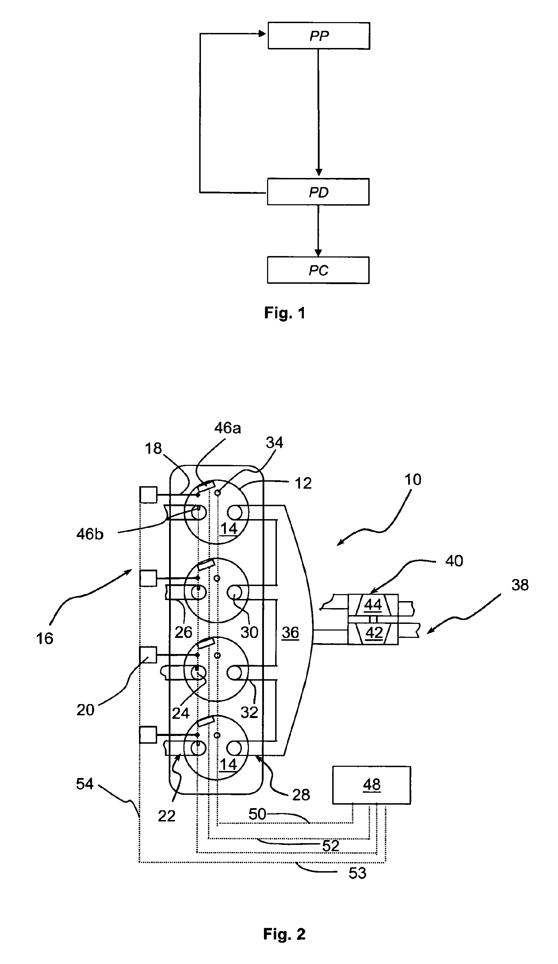

La méthodologie générale de traitement de ces combustions anormales est schématisée sur la figure 1, avec dans un premier temps une phase de prévention (*PP*) pour limiter au maximum les chances d'apparition du phénomène, puis une phase de détection (*PD*) lorsque la prévention n'a pas suffit à éviter le phénomène, pour déterminer si oui ou non il y a lieu d'intervenir dans le cycle même où le pré allumage a été détecté au moyen d'une phase corrective (*PC*).

## État de la technique

La phase de détection comporte une phase d'acquisition de signaux, puis une phase de traitement de signaux permettant de détecter l'apparition du pré allumage à forte charge, de le caractériser et de le quantifier.

On connaît par la demande de brevet EP 1.828.737, une méthode pour détecter l'apparition du pré allumage à forte charge, de type *rumble*. Cette méthode est basée sur la mesure d'un signal relatif au déroulement de la combustion, et une comparaison avec un signal-seuil. La présence d'une combustion anormale, de type bruit sourd de grondement ou "rumble", dans la chambre de combustion, est détectée lorsque l'amplitude du signal dépasse de façon significative celle du signal-seuil. Selon cette méthode, le signal-seuil correspond à l'amplitude du signal produit lors d'une combustion avec cliquetis ou lors d'une combustion normale (conventionnelle).

Cependant, selon cette méthode, la détection ainsi réalisée ne permet pas d'agir au cours du cycle même de la détection. Les actions de corrections de ce type de pré allumage ne peuvent donc être réalisée qu'après la réalisation d'un tel phénomène, ce qui peut nuire sérieusement à l'intégrité du moteur.

On connaît également la méthode décrite dans le brevet FR 2.897.900. Selon cette méthode, on peut agir plus rapidement après la détection du pré allumage : on est capable d'agir au cours du même cycle que le cycle de détection du phénomène. Pour ce faire, le signal-seuil est préalablement calculé, c'est-à-dire avant le fonctionnement du moteur, puis stocké dans des tables de données du calculateur, appelées cartographies.

Cependant, l'utilisation de cartographies, ne permet pas de détecter à tout moment, c'est-à-dire en temps réel, le début d'un tel phénomène. De ce fait, il est toujours possible que la détection se fasse trop tardivement. De plus, aucune quantification de l'évolution du phénomène ne peut être réalisée. Ainsi, la nécessité ou non d'appliquer une phase de correction repose uniquement sur la comparaison de deux amplitudes à un instant donné. Or un tel phénomène peut très bien débuter, puis s'arrêter sans entraîner de dommage pour le moteur, et donc ne pas nécessiter de phase corrective.

Ainsi, l'objet de l'invention concerne un procédé alternatif permettant de détecter en temps réel l'apparition d'un phénomène de pré allumage à forte charge (du type *rumble*), de le caractériser et de le quantifier, avec les dispositifs et systèmes couramment utilisés dans les moteurs, de façon à prendre des mesures permettant de l'éviter dans la suite du fonctionnement du moteur, au cours du même cycle que celui de la détection. La méthode s'appuie sur une caractérisation de valeurs d'indicateurs de combustion, CA10 par exemple, sur plusieurs cycles, tout en s'affranchissant des cycles pour lesquels un pré allumage se produit.

## Le procédé selon l'invention

L'objet de l'invention concerne un procédé de contrôle de la combustion d'un moteur à combustion interne à allumage commandé, dans lequel on détecte une combustion anormale dans une chambre de combustion (14) d'au moins un cylindre (12) dudit moteur, dans lequel on enregistre un signal représentatif d'un état de la combustion au moyen d'un capteur placé dans le moteur, et on déduit dudit signal au moins un indicateur de la combustion à chaque cycle moteur. Le procédé comporte les étapes suivantes pour chaque cycle moteur :

- on détermine au moins un paramètre caractérisant une distribution de N valeurs d'indicateurs de la combustion acquises sur N cycles précédant le cycle en cours, en s'affranchissant, parmi lesdites N valeurs, de valeurs extrêmes ;

- on définit au moins un seuil pour ledit indicateur au moyen desdits paramètres caractérisant ladite distribution ;

- on détecte le début d'une combustion anormale en comparant l'indicateur de la combustion avec ledit seuil ;

- on contrôle le déroulement de la combustion anormale détectée dans la chambre de combustion.

Selon un mode de réalisation, le signal peut être une mesure continue de pression au sein du cylindre. L'indicateur peut être l'angle vilebrequin où 10 % de l'énergie introduite a été dégagée.

Selon un mode de réalisation, le paramètre caractérisant la distribution est déterminé au moyen d'un estimateur robuste. Cet estimateur robuste peut être choisi parmi l'un des estimateurs robustes suivants : la moyenne réduite, la médiane, un estimateur m issu d'une minimisation de la fonction f suivante :

$$f(V,m) = (|V(1) - m|)^{a} + ... + (|V(N) - m|)^{a},$$

où *a* est un nombre réel compris entre 0 et 2, et V(1).... V(N) sont les N valeurs d'indicateurs de la combustion.

Selon un autre mode de réalisation, le paramètre caractérisant la distribution est déterminé à partir d'une modélisation de la distribution, en appliquant les étapes suivantes :

a- on retire X valeurs d'indicateurs parmi les N valeurs de la distribution à modéliser ;

b- on modélise la distribution des valeurs d'indicateurs restantes, en choisissant une loi de distribution expérimentale a priori ;

c- on calcule un critère de qualité de la modélisation ;

d- si le critère indique une qualité de modélisation insuffisante, on retire encore des valeurs d'indicateur, parmi les N-X valeurs restantes, et on réitère à l'étape b.

Selon ce mode de réalisation, le critère de qualité de la modélisation peut correspondre à une somme d'écarts quadratiques entre la distribution expérimentale a priori et la distribution modélisée, ou à une somme d'écarts absolus entre la distribution expérimentale a priori et la distribution modélisée.

Selon l'invention, le seuil peut être déterminé en définissant une tolérance sur le paramètre caractérisant la distribution. Par exemple, le seuil peut correspondre à une somme de la moyenne réduite des N valeurs d'indicateurs et de k fois l'écart type desdites N valeurs, k étant un réel positif ou négatif.

On peut également déterminer le seuil au moyen de contraintes définies à partie de valeurs de seuils obtenues sur banc moteur, et/ou à partir de valeurs de seuils obtenues sur des cycles précédents.

Enfin, selon l'invention, on peut déterminer plusieurs indicateurs de la combustion, et pour chacun d'eux on détermine au moins un seuil.

## Présentation des figures

Les autres caractéristiques et avantages de l'invention apparaîtront à la lecture de la description donnée ci-après en se référant aux graphiques annexés où :

- la figure 1 montre la méthodologie générale de traitement des combustions anormales de type pré allumage.

- la figure 2 montre un moteur utilisant la méthode de détection selon l'invention.

- la figure 3 illustre une répartition de valeurs de CA10 en fonction du cycle (CY), en identifiant les combustions normales (CN) et les combustions avec pré allumage (CPA);

- la figure 4 illustre une répartition de valeurs de CA10 en fonction du cycle (CY), en identifiant les combustions normales (CN) et les combustions avec pré allumage (CPA), dans le cas où peu de valeurs de CA10 sont disponibles.

- les figures 5A et 5B représentent une distribution de valeurs de CA10 en fonction du cycle. Sur la figure 5A la moyenne et l'écart type sont calculés à partir de statistiques classiques, sur la figure 5B la moyenne et l'écart type sont obtenus à partir de statistiques robustes.

- la figure 6 représente un histogramme de valeurs de CA10 et une loi normale permettant de s'ajuster au mieux à cet histogramme.

- la figure 7 représente un histogramme de valeurs de CA10 et une loi normale permettant de s'ajuster au mieux à cet histogramme, dans le cas d'apparition de pré allumage (PA).

- la figure 8 illustre la modélisation des valeurs de CA10 au moyen d'une loi non normale.

- la figure 9 représente les évolutions des critères 12 et 13 en fonction du nombre de cycles (*Ncy*) utilisés pour la modélisation selon trois lois : GEV, NAKAGAMI et LOG-LOGISTIC.

## Description détaillée du procédé

Sur la figure 2, un moteur à combustion interne 10 suralimenté à allumage commandé, en particulier de type essence, comprend au moins un cylindre 12 avec une chambre de combustion 14 à l'intérieur de laquelle se produit la combustion d'un mélange d'air suralimenté et de carburant.

Le cylindre comprend au moins un moyen d'alimentation en carburant sous pression 16, par exemple sous la forme d'un injecteur de carburant 18 contrôlé par une vanne 20, qui débouche dans la chambre de combustion, au moins un moyen d'admission d'air 22 avec une soupape 24 associée à une tubulure d'admission 26 se terminant par un plénum 26b (non représenté sur la figure), au moins un moyen d'échappement des gaz brûlés 28 avec une soupape 30 et une tubulure d'échappement 32 et au moins un moyen d'allumage 34, comme une bougie, qui permet de générer une ou plusieurs étincelles permettant d'enflammer le mélange carburé présent dans la chambre de combustion.

Les tubulures 32 des moyens d'échappement 28 de ce moteur sont raccordées à un collecteur d'échappement 36 lui-même connecté à une ligne d'échappement 38. Un dispositif de suralimentation 40, par exemple un turbocompresseur ou un compresseur volumétrique, est placé sur cette ligne d'échappement et comprend un étage d'entraînement 42 avec une turbine balayée par les gaz d'échappement circulant dans la ligne d'échappement et un étage de compression 44 qui permet de faire admettre un air d'admission sous pression dans les chambres de combustion 14 par les tubulures d'admission 26.

Le moteur comprend des moyens 46a de mesure de la pression cylindre, disposés au sein même du cylindre 12 du moteur. Ces moyens de mesure sont généralement constitués par un capteur de pression qui permet de générer un signal représentatif de l'évolution de la pression dans un cylindre.

Le moteur peut également comporter des moyens 46b de mesure de la pression d'admission, disposés dans le plénum 26b. Ces moyens de mesure sont généralement constitués par un capteur de pression absolue, de type piézoélectrique, qui permet de générer un signal représentatif de l'évolution de la pression d'admission dans le plénum d'admission.

Le moteur comprend également une unité de calcul et de commande 48, dénommée calculateur moteur, qui est reliée par des conducteurs (pour certains bidirectionnels) aux différents organes et capteurs du moteur de façon à pouvoir recevoir les différents signaux émis par ces capteurs, comme la température de l'eau ou la température de l'huile, pour les traiter par calcul et ensuite commander les organes de ce moteur pour assurer son bon fonctionnement.

Ainsi, dans le cas de l'exemple montré à la figure 2, les bougies 34 sont reliées par des conducteurs 50 au calculateur moteur 48 de façon à commander le moment de l'allumage du mélange carburé, le capteur de pression cylindre 46a est connecté par une ligne 52 à ce même calculateur moteur pour lui envoyer les signaux représentatifs de l'évolution de la pression dans le cylindre, et les vannes 20 de commande des injecteurs 18, sont raccordées par des conducteurs 54 au calculateur 48 pour commander l'injection de carburant dans les chambres de combustion. Les moyens 46b sont également connectés par une ligne 53 au calculateur moteur 48.

Au sein d'un tel moteur, le procédé selon l'invention permet de détecter l'apparition d'un phénomène de pré allumage à forte charge (du type *rumble*), de le caractériser et de le quantifier. Selon un exemple de réalisation, le procédé comporte les étapes suivantes :

1- on mesure la pression dans le cylindre, et on en déduit un indicateur de la combustion à chaque cycle moteur ; Puis, pour chaque cycle :

2- on détermine des paramètres caractérisant la distribution de N valeur d'indicateurs acquises sur les N cycles précédents le cycle en cours, en s'affranchissant de certaines valeurs dites extrêmes ;

3- on définit un seuil caractérisant une combustion sans pré allumage au moyen des paramètres caractérisant la distribution ;

4- on détecte le début d'une combustion anormale en comparant l'indicateur de la combustion calculé au cycle en cours avec le seuil ;

5- on contrôle le déroulement de la combustion anormale détectée dans la chambre de combustion.

### 1. Détermination d'indicateur de la combustion à chaque cycle

On enregistre un signal représentatif de l'état de la combustion, au moyen d'un capteur placé dans le moteur. Selon un mode de réalisation on choisit la pression cylindre. La mesure de la pression cylindre est réalisée à partir des moyens 46a de mesure de la pression cylindre. L'instrumentation des cylindres pour une mesure de pression est de plus en courante sur les véhicules.

Puis, au cours de chaque cycle, on calcule un indicateur de la combustion, à partir de ce signal. Selon un mode de réalisation on choisit le CA10. Le CA10 correspond à l'angle vilebrequin où 10 % de l'énergie introduite a été dégagée ou, selon la convention utilisée, à 10 % de l'énergie totale dégagée.

### 2. Caractérisation d'une combustion normale à partir des indicateurs

La caractérisation d'une combustion normale, c'est-à-dire sans phénomène de pré allumage, est réalisée en ligne à partir de N valeurs de CA10 calculées sur les N-1 cycles précédent et le cycle en cours.

Deux problèmes sont à surmonter pour réaliser cette caractérisation :

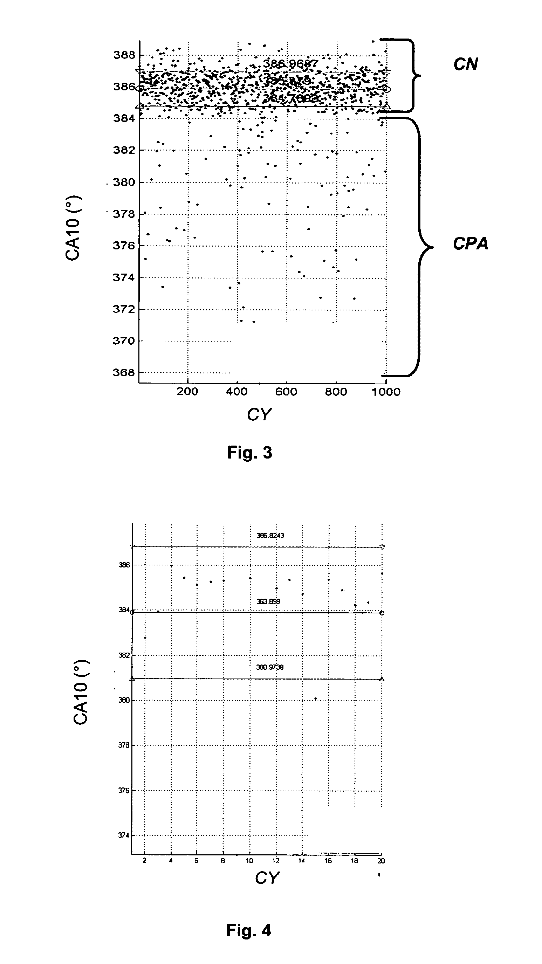

1- certaines valeurs de CA10 ont été obtenues au cours de cycle pour lesquels un pré allumage a eu lieu. Ces valeurs ne sont donc pas caractéristiques d'une combustion normale. Ces valeurs de CA10 obtenues au cours de cycle pour lesquels un pré allumage a lieu, sont appelées « outliers » ou « valeurs extrêmes ». Il s'agit de valeurs qui s'écartent exagérément de l'ensemble des autres observations du groupe de données auquel elles appartiennent. La figure 3 illustre cette répartition des valeurs de CA10 en fonction du cycle (CY). Le nuage supérieur et dense, correspond à des combustions normales (CN), alors que le nuage inférieur correspond à des combustions avec pré allumage (CPA).

2- la nécessité de contrôler rapidement la combustion, implique un nombre restreint de cycles (valeur de N faible, typiquement de l'ordre de dix), et donc peu de valeurs de CA10 pour caractériser une combustion normale. De ce fait, les valeurs de CA10 obtenues au cours de cycles pour lesquels un pré allumage a eu lieu sont d'autant plus influentes, et ne permettent pas d'obtenir une caractérisation suffisante pour détecter ultérieurement un pré allumage. La figure 4 illustre ce problème. Elle représente une répartition de quelques valeurs de CA10 en fonction du cycle.

Selon l'invention, on caractérise une combustion normale, c'est-à-dire sans phénomène de pré allumage, en déterminant un ou plusieurs paramètres caractéristiques de la distribution des N valeurs de CA10 calculées sur les N-1 cycles précédent et le cycle en cours, en s'affranchissant des valeurs dites « extrêmes ».

Selon un mode de réalisation, ces paramètres sont déterminés au moyen d'un estimateur robuste. Un estimateur robuste se distingue d'un estimateur non robuste en ce qu'il n'est pas fortement affecté par la présence, dans les mesures acquises, d'une certaine quantité de valeurs extrêmes. De tels estimateurs sont par exemple décrits dans le document suivant :

G., SAPORTA, 1990, « Probabilité analyse des données et statistique », Editions Technip, p. 311 - 313

On peut par exemple choisir l'un des estimateurs suivants :

- La moyenne réduite : on calcule la moyenne sur les mesures dont on a écarté x % des plus hautes et x % des plus basses.

- La médiane : on classe les mesures de la plus basse à la plus haute, et la médiane est la valeur supérieure à la moitié des mesures, et inférieure à l'autre moitié.

- Une classe spécifique d'estimateurs robustes s'obtient en minimisant une fonction coût particulière, définie à partir des mesures. La médiane est par exemple l'estimateur de ce type qui minimise la somme des écarts absolus aux mesures. Mais d'autres fonctions peuvent être utilisées.

De façon générale, pour calculer ces estimateurs robustes, on minimise une fonction $f$ qui est définie à partir des N valeurs de CA10, notées V(1).... V(N), et de l'estimateur que l'on recherche. La minimisation de cette fonction conduit à la valeur de l'estimateur robuste. On peut par exemple calculer l'estimateur robuste $m$ qui minimise la fonction $f$ suivante :

$$f(V,m) = (|V(1) - m|)^a + ... + (|V(N) - m|)^a,$$

où a est un nombre réel compris entre 0 et 2.

Ces paramètres (estimateurs robustes) sont insensibles aux valeurs extrêmes. Selon ce mode de réalisation, on peut détecter une combustion anormale soit sur un point de fonctionnement stabilisé soit lors d'un fonctionnement transitoire.

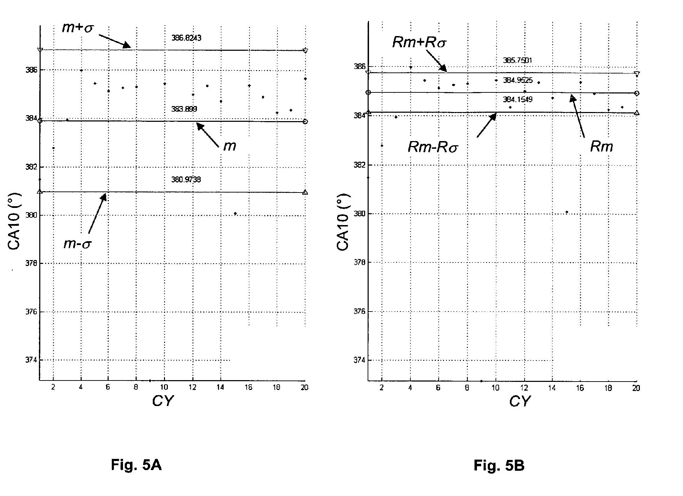

La figure 5 illustre le résultat de la méthode. Les figures 5A et 5B représentent une distribution de valeurs de CA10 en fonction du cycle. Le trait noté $m$ indique la moyenne, et σ indique l'écart type. Sur la figure 5A la moyenne et l'écart type sont calculés à partir de statistiques classiques. Sur la figure 5B la moyenne et l'écart type sont obtenus à partir de statistiques robustes notées $Rm$ et $R\sigma$.

Selon un autre mode de réalisation, ces paramètres sont déterminés au moyen d'une modélisation de la distribution des N valeurs de CA10, par un processus itératif.

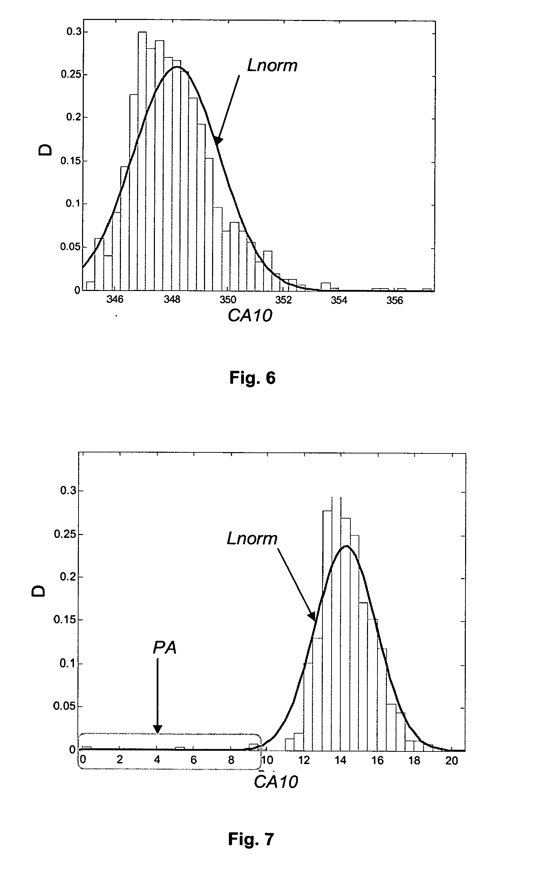

La dispersion cycle à cycle de la combustion est généralement représentée par une loi normale à laquelle on associe une moyenne, qui sert de référence pour caractériser le comportement du moteur, et un écart type qui sert classiquement à quantifier la stabilité de la grandeur observée. Or, il s'avère que l'écart type classique n'est pas toujours représentatif de la stabilité, et que la modélisation de la dispersion cyclique par une loi normale n'est pas optimale dans certaines conditions, comme l'illustre la figure 6. Sur cette figure est représentée l'histogramme de valeurs de CA10 (l'ordonnée représente la densité *D*) ainsi qu'une loi normale (*Lnorm*) permettant de s'ajuster au mieux à cet histogramme. Cette instabilité de combustion peut être directement ressentie par l'utilisateur au travers par exemple de ratés d'allumage (problématique de l'agrément de conduite mais aussi des émissions polluantes), et elle peut aussi être liée dans certains cas extrêmes à des combustions anormales pouvant entraîner la destruction du moteur (problématique du pré allumage à forte charge sur les moteurs à allumage commandé).

La méthode de modélisation de la distribution selon l'invention, permet de fournir des informations plus pertinentes qu'un couple "moyenne / écart type" calculé au sens de la loi normale. Ceci est important pour détecter une combustion anormale comme du pré allumage.

Un exemple de distribution expérimentale de CA10 et de modélisation par une loi normale (*Lnorm*) dans un cas d'apparition de pré allumage (*PA*) est donné sur la figure 7. On remarque que les cycles avec pré allumages étirent la distribution vers les faibles valeurs de CA10. Par conséquent, la modélisation effectuée (que ce soit sur la base d'une loi normale ou autre) est inévitablement faussée par cet étirement car celui-ci ne représente en rien une combustion normale.

La modélisation des combustions normales seules (c'est-à-dire des combustions qui ont été initiées par l'étincelle de la bougie) ne peut pas être réalisée à partir de l'échantillon complet de N cycles. Nous proposons donc une méthode automatique pour aboutir à la modélisation optimale des combustions normales. Cette démarche consiste à itérer sur le nombre d'échantillons pour trouver la modélisation optimale.

La méthode comporte alors les étapes suivantes

1. On retire *X* valeurs de CA10, parmi les N valeurs de la distribution à modéliser. De façon préférentielle on retire les valeurs les plus faibles.

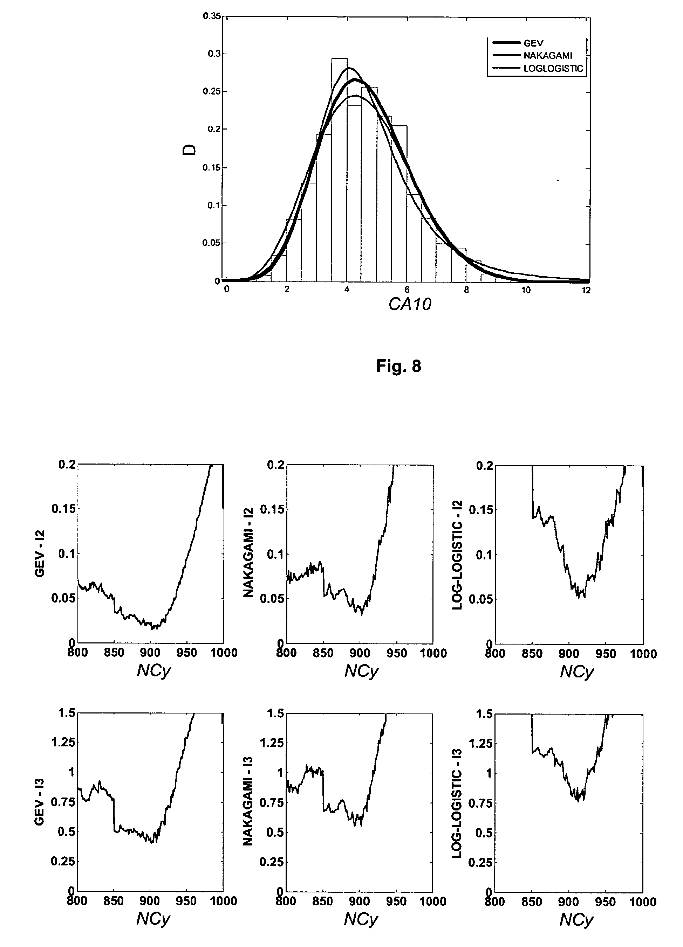

2. On modélise la distribution des valeurs de CA10 restantes, en choisissant une loi à priori (loi gamma, « Generalized Extreme Values », Weibull, Nakagami, log-logistic, ...), comme illustré sur la figure 8.

3. On calcule un critère de qualité de la modélisation.

4. Si le critère indique que la qualité n'est pas suffisante, on retire encore des valeurs de CA10, parmi les N-X valeurs de CA10. De façon préférentielle on retire les valeurs les plus faibles restantes. Puis on réitère le processus.

Le fait de retirer les *X* cycles pour lesquels les valeurs de CA10 sont les plus faibles, revient à supprimer de l'échantillon des valeurs qui correspondent potentiellement à des pré allumages. Après quelques itérations, l'algorithme permet d'éliminer tous les pré allumages et donc d'aboutir à un échantillon composé uniquement de combustions normalement initiées à la bougie. Le seuil de détection entre les pré allumages et les combustions normales est donc fixé automatiquement par cet algorithme lorsque le critère de modélisation indique une modélisation optimale.

Parmi ces critères à minimiser, nous proposons d'utiliser par exemple la somme des écarts quadratiques entre la distribution expérimentale ($x_{i\_exp}$) et la distribution modélisée ($x_{i\_modélisés}$) :

$$I_2 = \sum \left( x_{i\_exp} - x_{i\_modélisés} \right)^2$$

ou la somme des écarts absolus entre les deux distributions :

$$I_3 = \sum \left| x_{i\_exp} - x_{i\_modélisés} \right| .$$

Cette méthode est illustrée sur la figure 9, sur laquelle on peut observer les évolutions des critères $I_2$ et $I_3$ en fonction du nombre de cycles (*NCy*) utilisés pour la modélisation selon trois lois (GEV, NAKAGAMI et LOG-LOGISTIC). Ces critères diminuent dans un premier temps, car la modélisation gagne en fiabilité lorsqu'on retire les pré allumages. Puis dans un second temps, ces critères augmentent progressivement, puisqu'en plus de pré allumages, on retire des cycles normaux, la modélisation perd donc de sa qualité. Le seuil de détection du pré allumage consiste donc à quantifier le nombre de cycles qu'il faut retirer à l'échantillon complet pour atteindre la modélisation optimale.

On constate sur cet exemple que ces critères atteignent des minima lorsque 80 à 100 cycles sont retirés de l'échantillon, ce qui correspond au nombre de pré allumage qu'une procédure de tri itérative permet de détecter.

Puis, à partir de la loi de distribution des valeurs de CA10 ainsi modélisée, on calcule un ou plusieurs paramètres caractéristiques de cette distribution. On peut par exemple utiliser les paramètres suivants : moyenne, médiane, facteur d'asymétrie, ou encore un facteur d'aplatissement.

3. Définition de seuils et détection de combustion avec pré allumage

A partir de ces paramètres caractéristiques de la distribution d'une combustion normale, on définit des seuils. Ces seuils permettent de définir si une valeur de CA10 donnée appartient ou non à la distribution des valeurs de CA10 des N cycles précédents, sans tenir comptes des combustions avec pré allumage.

Il existe de nombreuses techniques connues pour déterminer si une valeur appartient à une distribution donnée. On peut par exemple citer le test du X2, test de Kolmogorov, tests de maximum de vraisemblance, ...

On peut également s'appuyer uniquement sur la moyenne $m(N)$ et l'écart type robustes $\sigma(N)$. Par exemple, on peut considérer que si une valeur de CA10 est supérieure à deux fois l'écart type, alors cette valeur correspond à une combustion avec pré allumage.

Ainsi, les seuils calculés sont dynamiques, car ils évoluent à chaque cycle. En effet, pour chaque cycle, on caractérise la distribution des valeurs de CA10 des N cycles précédents, en s'affranchissant des valeurs extrêmes. Les paramètres servant à caractériser cette distribution servent alors à définir un seuil. Au cycle suivant, on caractérise à nouveau la distribution, et le seuil est donc modifié.

En somme, un seuil est défini à partir des paramètres caractérisant une distribution de valeurs de CA10 obtenues lors de combustion sans pré allumage, et d'une tolérance sur ces paramètres : moyenne robuste et tolérance liée à l'écart type par exemple.

Une fois les seuils définis, on calcule le CA10 sur le cycle en cours et on le compare au seuil défini, de façon à détecter le début d'une combustion anormale en comparant l'indicateur de la combustion (CA10) au seuil.

Autres modes de réalisation

Selon un mode particulier de réalisation, on peut contraindre la définition des paramètres caractéristiques de la distribution d'une combustion normale à partir de valeurs connues, obtenues sur banc, et/ou par les valeurs obtenues sur des cycles précédents.

L'utilisation des valeurs des seuils obtenus sur des cycles précédents permet de mieux suivre la dynamique du moteur, et de la lisser.

L'utilisation de valeurs obtenues sur banc permet d'intégrer des contraintes de calibration, afin que les seuils dynamiques soient « bornés ».

En pratique, on calcule un seuil $t_D(N)$ en appliquant les étapes suivantes :

1. Détermination sur banc moteur d'un seuil $t_C$ lié à des contraintes de calibration, et/ou enregistrement de $N_D$ seuils dynamiques calculés pour des cycles précédant le cycle en cours : $t_D(N-1)$, $t_D(N-2)$.

2. Calcul d'un paramètre caractéristique de la distribution des N valeurs de CA10 calculées sur les N-1 cycles précédent et le cycle en cours, en s'affranchissant des valeurs dites « extrêmes » :
On calcule un estimateur robuste $m(N)$ minimisant une fonction $f$, définie à partir des valeurs $V(i)$ de CA10, m, $t_C$ et $t_D$. On peut par exemple utiliser :

$$|(V(1) - m)|^1 + ... + |(V(N) - m)|^1 + (m - (m(N-1) + m(N-2))/2).$$

Dans cet exemple, l'estimateur $m(N)$ s'apparente à une médiane, mais contrainte de rester près de la moyenne des deux dernières « moyennes », notées $m(N-1)$ et $m(N-2)$.

3. Définition de seuil :

On calcule un seuil $t_D(N)$ à partir d'une fonction $g$ dépendant de V, m, $t_C$ et $t_D$ et de paramètres kj déterminés à l'avance. On peut par exemple utiliser :

$$t_D (N) = \min [m(N) - m(N-1) + t_D(N-1) , t_C].$$

Ainsi, par exemple, si m(N) a varié d'un cycle sur l'autre, on augmente le seuil d'autant (le terme m(N) - m(N-1)+ $t_D$(N-1), toutefois sans dépasser le seuil $t_C$ fixé à la calibration.

4- Contrôle de la combustion anormale

Au moyen de cette comparaison, le calculateur moteur peut détecter le début d'une combustion anormale de type "rumble" ou du type "pré allumage" dans la chambre de combustion.

En cas de combustion anormale, ce calculateur lance ensuite les actions nécessaires au contrôle de cette combustion afin d'éviter la poursuite d'une telle combustion.

Par contrôle de la combustion anormale, il est entendu non seulement la possibilité de maîtriser le déroulement de cette combustion pour éviter les augmentations brutales de pressions destructrices mais aussi d'arrêter complètement une telle combustion, telle que par étouffement.

A titre préférentiel, ce contrôle de la combustion est réalisé par une réinjection de carburant à un angle de vilebrequin déterminé par les injecteurs 18. Plus précisément, le calculateur commande les vannes 20 de façon à ce que l'injecteur du cylindre concerné permette d'introduire dans la chambre de combustion une quantité de carburant sous forme liquide. La quantité de carburant réinjectée dépend de la constitution du moteur et peut aller de 10% à 200% de la quantité de carburant initialement introduite dans cette chambre de combustion. De ce fait, le carburant réinjecté sert à contrarier la flamme qui commence à se déployer lors de la combustion anormale. Cette réinjection permet soit de souffler cette flamme, soit d'étouffer cette flamme par augmentation de la richesse du mélange carburé. De plus, le carburant injecté sous forme liquide utilise la chaleur présente autour de cette flamme pour se vaporiser et les conditions de température autour de la flamme vont baisser en retardant la combustion du mélange carburé et surtout son auto-inflammation.

Après cette injection de carburant, la pression dans le cylindre augmente mais moins brutalement. Cette pression décroît ensuite pour atteindre un niveau compatible avec le niveau de pression d'une combustion conventionnelle.

Par ce mécanisme, tout développement d'une combustion anormale avec une grande vitesse de combustion et des pressions élevées est prohibé. Bien entendu, la mise en oeuvre des moyens pour contrôler la combustion anormale se fait à chaque cycle durant lequel une telle combustion est détectée par le calculateur.

Les actions du procédé telles que décrites ci-dessus peuvent être combinées à d'autres actions plus lentes, telles que la fermeture du papillon, pour empêcher que les conditions de pression de la chambre de combustion soient favorables à une combustion anormale dans les cycles qui suivent.

La présente invention n'est pas limitée aux exemples de réalisation décrits ci-dessus mais englobe toutes variantes et tous équivalents.

Notamment et cela sans sortir du cadre de l'invention, d'autres agents pour arrêter la combustion anormale peuvent être introduits dans la chambre de combustion. Ainsi, ces agents peuvent être de l'eau sous forme vapeur ou liquide, ou du dioxyde de carbone. Dans ce cas, le moteur comprend des injecteurs spécifiques additionnels pour l'introduction de ces agents en association avec un circuit dédié (pompe, réservoir,...).

Il peut également être envisagé de contrôler la combustion anormale en faisant baisser la pression interne de la chambre de combustion en effectuant une décharge de pression en ouvrant une soupape de décharge. Cette soupape de décharge peut être soit une soupape additionnelle soit la soupape d'admission 24 et/ou la soupape d'échappement 30.

De plus, la présente invention peut également concerner un moteur à allumage commandé et à injection indirecte. Dans ce cas, le contrôle du déroulement de la combustion anormale se fera par l'utilisation d'un injecteur spécifique (carburant, eau, CO2), comme évoqué ci-dessus, ou par ouverture de soupape.

L'invention permet d'utiliser d'autres mesures que la pression cylindre, telle que le couple instantané, le régime instantané, le niveau de vibrations (capteurs accélérométriques), signal d'ionisation,.... L'invention pourrait également utiliser d'autres indicateurs :

- à partir de la pression cylindre : PMI, pression cylindre maximale, angle vilebrequin à la pression maximale, CAxx, maximum de dégagement d'énergie,...

- à partir du couple instantané : maximum de couple, dérivée maximale de couple, ...

- à partir du régime instantané : maximum de vitesse, accélération maximale, ...

Les indicateurs dérivés de la pression cylindre ou d'un signal d'ionisation sont préférés. En effet, une bonne caractérisation du pré allumage demande avant tout de définir des indicateurs qui soient les plus représentatifs possibles de l'état d'avancement de la combustion dans la chambre. Un indicateur comme le CA10 est donc par exemple plus robuste qu'un indicateur dérivé, d'une mesure du couple instantané du fait de « l'éloignement » de cette mesure (le couple récupéré sur le vilebrequin est une image de l'énergie récupérée après la combustion, et pas directement une image du déroulement de la combustion). Une surveillance du moteur peut toutefois être envisagée à partir de ces mesures de couple et de régime.

L'énorme avantage de l'angle de CA10 et du délai d'initiation est qu'ils rendent compte directement des premiers instants de la combustion. Par conséquent, une détection d'un comportement anormal au cours de ces premiers instants permet de disposer de plus de temps pour agir ensuite dans le même cycle.

L'invention n'est pas limitée à l'utilisation d'un seul indicateur. En effet, il peut être avantageux de combiner plusieurs grandeurs à la fois en utilisant un seuil multicritères, ou un seuil pour chaque indicateur.

Enfin, le procédé selon l'invention peut également être appliqué au banc moteur.

**Revendications**

1. Procédé de contrôle de la combustion d'un moteur à combustion interne à allumage commandé, dans lequel on détecte une combustion anormale dans une chambre de combustion (14) d'au moins un cylindre (12) dudit moteur, dans lequel on enregistre un signal représentatif d'un état de la combustion au moyen d'un capteur placé dans le moteur, et on déduit dudit signal au moins un indicateur de la combustion à chaque cycle moteur, **caractérisé en ce que**, pour chaque cycle moteur :

   - on détermine au moins un paramètre caractérisant une distribution de N valeurs d'indicateurs de la combustion acquises sur N cycles précédant le cycle en cours, en s'affranchissant, parmi lesdites N valeurs, de valeurs extrêmes ;
   - on définit au moins un seuil pour ledit indicateur au moyen desdits paramètres caractérisant ladite distribution ;
   - on détecte le début d'une combustion anormale en comparant l'indicateur de la combustion avec ledit seuil ;
   - on contrôle le déroulement de la combustion anormale détectée dans la chambre de combustion.

2. Procédé selon la revendication 1, dans lequel ledit signal est une mesure continue de pression au sein dudit cylindre.

3. Procédé selon la revendication 1 ou 2, dans lequel ledit indicateur est l'angle vilebrequin où 10 % de l'énergie introduite a été dégagée.

4. Procédé selon l'une des revendications 1 à 3, dans lequel on détermine ledit paramètre caractérisant ladite distribution au moyen d'un estimateur robuste.

5. Procédé selon la revendication 4, dans lequel on choisit ledit estimateur robuste parmi l'un des estimateurs robustes suivants : la moyenne réduite, la médiane, un estimateur *m* issu d'une minimisation de la fonction *f* suivante :

$$f(V,m) = (|V(1) - m|)^a + ... + (|V(N) - m|)^a,$$

où *a* est un nombre réel compris entre 0 et 2, et V(1).... V(N) sont les N valeurs d'indicateurs de la combustion.

6. Procédé selon l'une des revendications 1 à 3, dans lequel on détermine ledit paramètre caractérisant ladite distribution à partir d'une modélisation de ladite distribution, en appliquant les étapes suivantes :

   a- on retire X valeurs d'indicateurs parmi les N valeurs de la distribution à modéliser ;
   b- on modélise la distribution des valeurs d'indicateurs restantes, en choisissant une loi de distribution expérimentale a priori ;
   c- on calcule un critère de qualité de la modélisation ;
   d- si ledit critère indique une qualité de modélisation insuffisante, on retire encore des valeurs d'indicateur, parmi les N-X valeurs restantes, et on réitère à l'étape b.

**7.** Procédé selon la revendication 6, dans lequel le critère de qualité de la modélisation correspond à une somme d'écarts quadratiques entre la distribution expérimentale a priori et la distribution modélisée, ou à une somme d'écarts absolus entre la distribution expérimentale a priori et la distribution modélisée.

**8.** Procédé selon l'une des revendications précédentes, dans lequel on détermine le seuil en définissant une tolérance sur ledit paramètre caractérisant ladite distribution.

**9.** Procédé selon la revendication 8, dans lequel ledit seuil correspond à une somme de la moyenne réduite des N valeurs d'indicateurs et de $k$ fois l'écart type desdites N valeurs, k étant un réel positif ou négatif.

**10.** Procédé selon l'une des revendications précédentes, dans lequel on détermine ledit seuil au moyen de contraintes définies à partie de valeurs de seuils obtenues sur banc moteur, et/ou à partir de valeurs de seuils obtenues sur des cycles précédents.

**11.** Procédé selon l'une des revendications précédentes, dans lequel on détermine plusieurs indicateurs de la combustion, et pour chacun d'eux on détermine au moins un seuil.

**Fig. 1**

**Fig. 2**

**Fig. 3**

**Fig. 4**

**Fig. 5A**

**Fig. 5B**

**Fig. 6**

**Fig. 7**

Fig. 8

**EP 2 175 121 A1**

Europäisches
Patentamt

European
Patent Office

Office européen
des brevets

**RAPPORT DE RECHERCHE EUROPEENNE**

Numéro de la demande

EP 09 29 0720

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2007/001064 A (TOYOTA MOTOR CO LTD [JP]; DENSO CORP [JP]; KANEKO RIHITO [JP]; KASASHI) 4 janvier 2007 (2007-01-04) | 1-2,4-5, 8-11 | INV. F02D35/02 |
| A | * alinéa [0078] - alinéa [0129]; figures * | 6-7 | ADD. |
| | ----- | | F02D19/12 |
| X | US 2007/016387 A1 (TAKEMURA YUICHI [JP] ET AL) 18 janvier 2007 (2007-01-18) | 1-2,4-5, 8-11 | F02D41/40 |
| A | * alinéas [0029] - [0044]; revendication 1; figures * | 2 | |
| | ----- | | |
| A,D | FR 2 897 900 A (INST FRANCAIS DU PETROLE [FR]) 31 août 2007 (2007-08-31) * le document en entier * | 1-3, 10-11 | |
| | ----- | | |
| A | DE 10 2004 033072 A1 (BOSCH GMBH ROBERT [DE]) 28 juillet 2005 (2005-07-28) * le document en entier * | 2-3 | |
| | ----- | | |

| DOMAINES TECHNIQUES RECHERCHES (IPC) |
|---|
| F02D G01L G01M |

Le présent rapport a été établi pour toutes les revendications

| Lieu de la recherche | Date d'achèvement de la recherche | Examinateur |
|---|---|---|
| Munich | 21 décembre 2009 | Aign, Torsten |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0720

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-12-2009

| Document brevet cité au rapport de recherche | Date de publication | Membre(s) de la famille de brevet(s) | Date de publication |
|---|---|---|---|
| WO 2007001064 A | 04-01-2007 | AR 053942 A1 | 23-05-2007 |
| | | CN 101213432 A | 02-07-2008 |
| | | EP 1896817 A1 | 12-03-2008 |
| | | JP 2007009725 A | 18-01-2007 |
| | | KR 20080031905 A | 11-04-2008 |
| | | US 2008234918 A1 | 25-09-2008 |
| | | US 2007084266 A1 | 19-04-2007 |
| | | ZA 200800720 A | 31-12-2008 |
| | | ZA 200800722 A | 28-01-2009 |
| US 2007016387 A1 | 18-01-2007 | CN 101019013 A | 15-08-2007 |
| | | EP 1938072 A1 | 02-07-2008 |
| | | JP 2007023903 A | 01-02-2007 |
| | | WO 2007010958 A1 | 25-01-2007 |
| FR 2897900 A | 31-08-2007 | CN 101037970 A | 19-09-2007 |
| | | EP 1826379 A1 | 29-08-2007 |
| | | JP 2007231948 A | 13-09-2007 |
| | | US 2008035129 A1 | 14-02-2008 |
| DE 102004033072 A1 | 28-07-2005 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1828737 A

- FR 2897900

**Littérature non-brevet citée dans la description**

- **G., SAPORTA.** Probabilité analyse des données et statistique. Editions Technip, 1990, 311-313